# EUROPEAN PATENT APPLICATION

(11) **EP 3 637 721 A1**
(43) Date of publication of application: **15.04.2020**
(21) Application number: 18828597.7
(22) Date of filing: 09.07.2018
(51) Int. Cl.: H04L 29/06, H04L 29/08

(54) **DRIVE IMPLEMENTATION METHOD, APPARATUS AND DEVICE, AND COMPUTER READABLE STORAGE MEDIUM**

(30) Priority: 07.07.2017 CN 201710549639
(71) Applicant: ZTE Corporation, Shenzhen, Guangdong 518057 (CN)
(72) Inventor: WANG, Dan, Shenzhen Guangdong 518057 (CN); SUN, Quan, Shenzhen Guangdong 518057 (CN); LI, Feng, Shenzhen Guangdong 518057 (CN); DING, Bai, Shenzhen Guangdong 518057 (CN); YE, Xu, Shenzhen Guangdong 518057 (CN)
(74) Representative: Baudler, Ron
(86) International application number: PCT/CN2018/095038
(87) International publication number: WO 2019/007438

(57) **Abstract**

Disclosed are a driver implementation method, apparatus and device and a computer-readable storage medium. The method includes: analyzing a driving flow of a target driver; comparing the driving flow of the target driver with a driving flow of a preset default driver to obtain a difference part; implementing the difference part; and registering the target driver according to the driving flow of the default driver that is pre-implemented and the implemented difference part.

## Description

### TECHNICAL FIELD

The present disclosure relates to the field of computer technologies, and in particular, to a driver implementation method, apparatus and device, and a computer-readable storage medium.

### BACKGROUND

With continuous increase of network scale and the development of Internet of Things technology, architecture of existing network has been gradually difficult to keep pace with the development, and Software Defined Network (SDN) becomes a direction of network development in the future. An OpenFlow (a new network switching model) switch may be integrated with a SDN controller to accomplish a separation of data forwarding and routing control. This preliminarily realizes the core idea of the SDN.

However, in current networks, there are various network devices, and types and versions of protocols supported by vendors, switches, etc. may be different. Therefore, the SDN controller need to implement different drivers for various versions of each protocol, and the development effort is very large.

### SUMMARY

There is provided a driver implementation method including: analyzing a driving flow of a target driver; comparing the driving flow of the target driver with a driving flow of a preset default driver to obtain a difference part; implementing the difference part; and registering the target driver according to the driving flow of the default driver that is pre-implemented and the implemented difference part.

There is provided a driver implementation apparatus including: a flow analysis module configured to analyze a driving flow of a target driver; a difference comparison module configured to compare the driving flow of the target driver with a driving flow of a preset default driver to obtain a difference part; an implementation module configured to implement the difference part; and a registration module configured to register the target driver according to the driving flow of the default driver that is pre-implemented and the implemented difference part.

There is provided a driver implementation device including a processor, a memory, and a communication bus. The communication bus is configured to realize connection communication between the processor and the memory, the processor is configured to execute a driver implementation program stored in the memory to implement the steps of the above driver implementation method.

There is provided a computer-readable storage medium storing one or more programs which, when executed by one or more processors, cause the one or more processors to implement the steps of the above driver implementation method.

### BRIEF DESCRIPTION OF DRAWINGS

Fig. 1 is a flowchart of a driver implementation method according to an embodiment of the present disclosure.
Fig. 2 is another flowchart of the driver implementation method according to an embodiment of the present disclosure.
Fig. 3 is a block diagram of a driver implementation apparatus according to an embodiment of the present disclosure.
Fig. 4 is another block diagram of the driver implementation apparatus according to an embodiment of the present disclosure.

### DETAILED DESCRIPTION

In order to make the technical problems to be solved by the present disclosure, technical solutions and advantages clearer and more obvious, the present disclosure is further described in detail below with reference to the accompanying drawings and embodiments. It should be understood that the specific embodiments described herein are merely illustrative of the disclosure and are not intended to limit the disclosure.

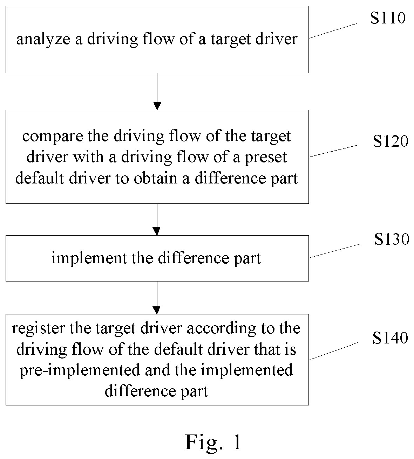

As shown in Fig. 1, an embodiment of the present disclosure provides a driver implementation method including the following steps S110 to S140.

At step S110, a driving flow of a target driver is analyzed.

According to the technical solution of the embodiment of the present disclosure, a driver framework can be implemented, and the target driver can be installed with the driver framework.

At step S120, the driving flow of the target driver is compared with a driving flow of a preset default driver to obtain a difference part.

In the embodiment of the present disclosure, a difference between a switch-driver interaction flow driven by the target driver and the driving flow of the preset default driver is analyzed.

At step S130, the difference part is implemented.

In the embodiment of the present disclosure, existing drivers that have already been implemented can be inherited to quickly implement a new driver. Therefore, it is possible to analyze the difference between the switch-driver interaction flow of the new driver and the driving flow of the preset default driver, and implement the difference.

At step S140, the target driver is registered according to the driving flow of the default driver that is pre-implemented and the implemented difference part.

In the embodiment of the present disclosure, the difference part is obtained by analyzing the driving flow of the target driver and comparing it with the driving flow of the default driver, and only the difference part is implemented. The target driver can be registered based on the implemented difference part and the previously implemented driving flow of the default driver. Since the driving flow of only the difference part, but not the entire target driver, needs to be implemented, the workload required to implement the target driver is greatly reduced.

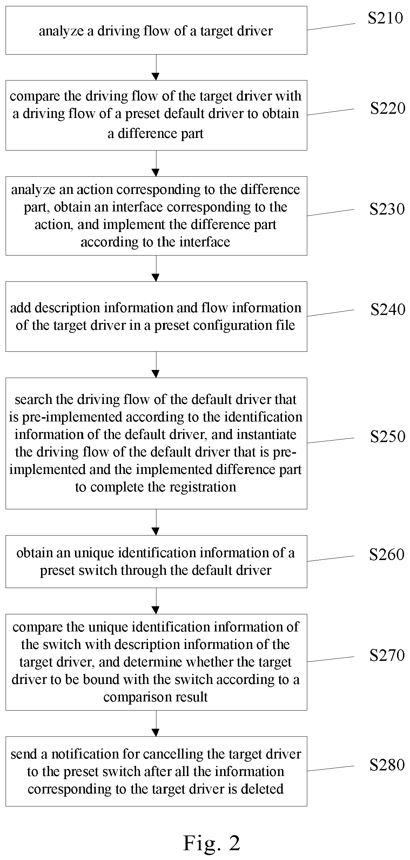

As shown in Fig. 2, an embodiment of the present disclosure provides a driver implementation method including the following steps S210 to S280.

At step S210, a driving flow of a target driver is analyzed.

At step S220, the driving flow of the target driver is compared with a driving flow of a preset default driver to obtain a difference part.

At step S230, an action corresponding to the difference part is analyzed, an interface corresponding to the action is obtained, and the difference part is implemented according to the interface.

In the embodiment of the present disclosure, taking implementation of a driver of an OpenFlow standard protocol as an example. All flows related to the driver in the OpenFlow standard protocol may be split into small steps with a single function, and each step is taken as an action in a workflow, so as to provide an interface for the actions. The process for implementing the default driver supporting the OpenFlow standard protocol includes the following steps: implementing, according to the OpenFlow standard protocol, flows related to all the drivers, and functions implemented in the implementation process include: all functions listed by an OpenFlow standard protocol, assembling and sending messages according to a request of an upper layer service module, transmitting messages reported by a switch to the upper layer service module and the like; registering a driver, cancelling a driver and the like; configuring description information and flow information of a driver by using a configuration file (after the functions of registering a driver, cancelling a driver, configuration file and the like are implemented, the subsequent operation can be ensured to be carried out).

In the embodiment of the present disclosure, according to the difference between the switch-driver interaction flow of the new driver and the driving flow of the preset default driver, an action corresponding to the difference, as well as adding a driver configuration file and implementing a registration/cancelation mechanism may be implemented. In the configuration file, only a parent driver and the steps of difference part are needed to be set.

At step S240, description information and flow information of the target driver are added to a preset configuration file, where the description information of the target driver records identification information of the default driver, and the flow information of the target driver records the implemented difference part.

In the embodiment of the present disclosure, a driver configuration file in an extensible markup Language (xml) format is used to configure the description information and the flow information of a driver, where the description information includes a (unique) name of the driver, a parent driver, vendor information, a hardware version, a software version, a system ID (systemId), and the like, and the flow information includes action information of a flow specific to the parent driver, and the action information includes a name of an action, an interface class in an API module, an implementation class in the driver, and a conversion processing class between actions.

At step S250, a driving flow of the default driver that is pre-implemented is searched according to the identification information of the default driver, and the driver flow of the default driver that is pre-implemented and the implemented difference part are instantiated to complete the registration.

In the embodiment of the present disclosure, a process of completing registration is as follows: in an Open Service Gateway Initiative (OSGi)-based environment, a driver framework implemented according to an embodiment of the present disclosure provides a service for reading description information and flow information of a driver from a configuration file; by using the service, all the description information and the flow of the driver is transferred to the driver framework; the drive framework stores the description information of the drive and instantiates all actions and relations used by the drive; after receiving a message, a protocol stack searches for a suitable driver from the driver framework, and processes the message by using the workflow formed by the actions of the driver.

In addition, the embodiment of the present disclosure further provides a process of cancelling a driver: in the OSGi-based environment, a driver framework implemented according to an embodiment of the present disclosure provides a service used by a driver implementation. The driver framework is notified to delete all information of the driver, and the driver framework deletes all information of the driver.

In one embodiment, to ensure flexibly registering or cancelling a driver, the solution of the embodiment of the present disclosure is based on the OSGi environment, and a module in which the drive is located may be installed into or uninstalled from a Karaf (an OSGi-based runtime environment) container by using commands in the Karaf command line port.

At step S260, a unique identification information of a preset switch is obtained through the default driver.

At step S270, the unique identification information of the switch is compared with the description information of the target driver, and it is determined whether to bind the target driver with the switch according to a comparison result.

In the embodiment of the present disclosure, when the default driver interacts with a switch, the default driver may obtain switch description information of the switch from the switch, where the switch description information includes vendor information, a hardware version, a software version, a serial number, data path ID (datapathId) description information, and the like, in which the datapathId is used to uniquely identify the switch. Then, the default driver transmits the description information of the switch to a driver framework, and the driver framework circulates the registered drivers; in the circulating process, the description information of one of the drivers (the description information is in a plurality of pieces) and the description information of the switch can be compared one by one, and one point is increased when the information is the same. After the driver framework completes the circulation of all the registered drives, scores of all the drivers may be compared, wherein the drive with a score exceeding 3 points and the highest score is a drive to be bound by the switch; if none of the drives with the score exceeding 3 points, the binding fails.

At step S280, after all information corresponding to the target driver is deleted, a notification for cancelling the target driver is sent to the preset switch.

In the embodiment of the present disclosure, when a drive is logged off, all switches bound to the drive receive a notification of the drive being logged off. These switches then request a device driver for rebinding a driver.

Based on the above, a user may use the Karaf command line to specify a drive of a switch or trigger a rebinding. A process of the rebinding is as follows: the user enters the datapathId of the switch (the specified switch) and the name of the drive (the specified drive) at the Karaf command line port, and the driver framework binds the switch identified by the datapathId with the specified drive according to the parameters. The user can trigger a rebind at the Karaf command line port and all switches will request the driver framework for rebinding a driver.

According to the embodiment of the present disclosure, a method for implementing a driver system based on the OSGi framework and workflow is provided, which can help a developer to reduce workload. Specifically, the method can rapidly implement a driver corresponding to a new standard or a vendor differentiation driver based on a default driver, thereby remarkably improving the development efficiency. In an actual operation environment, the method can dynamically install or uninstall a driver so as to reduce the pressure of equipment. In addition, the user can flexibly specify a version or require a re-binding of the driver based on a particular scenario to bind a device to an optimal driver.

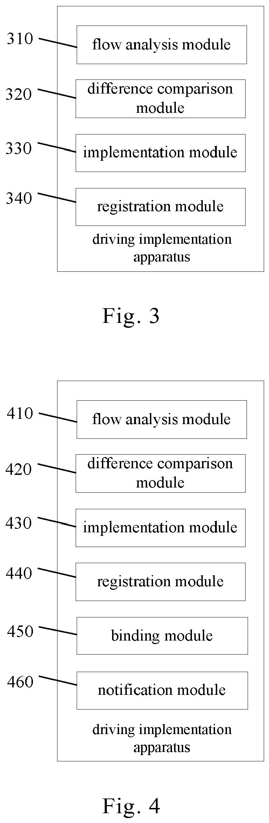

As shown in Fig. 3, an embodiment of the present disclosure provides a driver implementation apparatus including: a flow analysis module 310, a difference comparison module 320, an implementation module 330, and a registration module 340.

The flow analysis module 310 is configured to analyze a driving flow of a target driver.

According to the technical solution of the embodiment of the disclosure, the driver implementation apparatus of the embodiment of the present disclosure is a driver framework, and the target drive can be installed by using the driver framework.

The difference comparison module 320 is configured to compare the driving flow of the target driver with a driving flow of a default driver to obtain a difference part.

In the embodiment of the present disclosure, the difference comparison module 320 may analyze a difference between a switch-driver interaction flow driven by the target driver and the driving flow of the preset default driver.

The implementation module 330 is configured to implement the difference part.

In the embodiment of the present disclosure, existing drivers that have already been implemented can be inherited to quickly implement a new driver. Therefore, it is possible to analyze the difference between the switch-driver interaction flow of the new driver and the driving flow of the preset default driver, and implement the difference.

The registration module 340 is configured to register the target driver according to the driving flow of the default driver that is pre-implemented and the implemented difference part.

In the embodiment of the present disclosure, the difference part is obtained by analyzing the driving flow of the target driver and comparing it with the driving flow of the default driver, and only the difference part is implemented. The target driver can be registered based on the implemented difference part and the previously implemented driving flow of the default driver. Since the driving flow of only the difference part, but not the entire target driver, needs to be implemented, the workload required to implement the target driver is greatly reduced.

As shown in Fig. 4, an embodiment of the present disclosure provides a driver implementation apparatus including: a flow analysis module 410, a difference comparison module 420, an implementation module 430, a registration module 440, a binding module 450 and a notification module 460.

The flow analysis module 410 is configured to analyze a driving flow of a target driver.

The difference comparison module 420 is configured to compare the driving flow of the target driver with a driving flow of a preset default driver to obtain a difference part.

In the embodiment of the present disclosure, a controller needs to be started in advance, the driver framework is installed in a Karaf environment of the controller, and then the default driver is installed. The driver framework has only one default driver.

The implementation module 430 is configured to analyze an action corresponding to the difference part, obtain an interface corresponding to the action, and implement the difference part according to the interface.

In the embodiment of the present disclosure, the driving flow can be broken down for both the default driver and the target driver. The flow may be broken down into actions in a workflow and the flow of the default driver and the flow of the target driver are compared to obtain the difference part, and then an interface is provided and the difference part is implemented according to the action of the difference part.

The registration module 440 is configured to add description information and flow information of the target driver to a preset configuration file, where the description information of the target driver records identification information of the default driver, and the flow information of the target driver records the implemented difference part.

In the embodiment of the present disclosure, the configuration file is added to configure the description information and flow information of a driver. The description information includes a (unique) name of the driver, a parent driver, vendor information, a hardware version, a software version, systemId, etc., and the flow information includes action information of a flow specific to the parent driver, and the action information includes a name of an action, an interface class in an API module, an implementation class in the driver, and a conversion processing class between the actions.

The registration module 440 is configured to search a driving flow of the default driver that is pre-implemented according to the identification information of the default driver, and instantiate the driving flow of the default driver that is pre-implemented and the implemented difference part to complete the registration.

In the embodiment of the present disclosure, mechanism for registering and cancelling a driver is implemented based on the description information and the flow information of the configuration file. When installing the driver, the description information and the flow information is read from the configuration file to generate a driver instance, and the driver is registered within the driver framework. When a driver module is uninstalled, the drive is cancelled from the driver framework.

In the embodiment of the present disclosure, for drivers with vendor differentiation, the difference from the default driving flow can be analyzed to implement the difference part, and the parent driver and the differentiation step are set in the configuration file. Because the vendor differentiation drivers are similar to the default driver in terms of flow, only the difference part of the flow can be implemented based on the default driver, thereby the vendor differentiation drivers are implemented quickly.

In the embodiment of the present disclosure, the target driver is installed after the registration is completed, where the target driver is the vendor differentiation driver. A plurality of the vendor differentiation drivers may be installed.

The binding module 450 is configured to: obtain a unique identification information of a preset switch through the default driver; and compare the unique identification information of the switch with description information of the target driver, and determine whether the target drive to be bound with the switch according to a comparison result.

In the embodiment of the present disclosure, the switch is configured to actively establish a link to a controller. In the OpenFlow standard, after configuring IP address and port of the controller of the OpenFlow switch, the switch actively establishes a link to the driver of the controller. The driver framework of the controller firstly uses the default driver to complete version negotiation, process feature reply messages, obtain switch information, and then binds the OpenFlow switch with an appropriate driver according to the switch information. Subsequent interactions between the controller and the switch are handled by the driver.

The notification module 460 is configured to send a notification for cancelling the target driver to the preset switch after all information corresponding to the target driver is deleted.

According to the technical solution of the embodiment of the present disclosure, it is helpful to the developer to reduce the workload. Specifically, the technical solution can quickly implement a driver corresponding to a new standard or a vendor differentiation driver based on a default driver, thereby remarkably improving the development efficiency. In an actual operation environment, the technical solution can dynamically install or uninstall a driver so as to reduce the pressure of equipment. In addition, the user can flexibly specify a version or require a re-binding of the driver based on a particular scenario to bind a device to an optimal driver.

An embodiment of the present disclosure also provides a driver implementation device including a processor, a memory and a communication bus. The communication bus is configured to implement connection communication between the processor and the memory, the processor is configured to execute a driver implementation program stored in the memory to implement the steps of the driver implementation method according to the above embodiments.

An embodiment of the present disclosure also provides a computer-readable storage medium storing one or more programs which, when executed by one or more processors, cause the one or more processor to implement the steps of the driver implementation method according to the above embodiments.

Exemplary embodiments of the present disclosure have been described above with reference to the accompanying drawings, which are not intended to limit the scope of the claims of the present disclosure. Those skilled in the art can implement the present disclosure in various modifications, for example, features described as one embodiment can be used in another embodiment without departing from the scope and spirit of the present disclosure. Any modification, equivalent replacement and improvement made within the technical concept of the present disclosure should be within the scope of the present disclosure.

## Claims

1. A driver implementation method, comprising:
analyzing a driving flow of a target driver;
comparing the driving flow of the target driver with a driving flow of a preset default driver to obtain a difference part;
implementing the difference part; and
registering the target driver according to the driving flow of the default driver that is pre-implemented and the implemented difference part.

2. The method of claim 1, wherein the step of implementing the difference part comprises:
analyzing an action corresponding to the difference part,
obtaining an interface corresponding to the action, and
implementing the difference part according to the interface.

3. The method of claim 1, wherein the step of registering the target driver according to the driving flow of the default driver that is pre-implemented and the implemented difference part comprises:
adding description information and flow information of the target driver in a preset configuration file, wherein the description information of the target driver records identification information of the default driver, and the flow information of the target driver records the implemented difference part; and
searching the driving flow of the default driver that is pre-implemented according to the identification information of the default driver, and instantiating the driving flow of the default driver that is pre-implemented and the implemented difference part to complete the registration.

4. The method of claim 1, further comprising:
obtaining a unique identification information of a preset switch through the default driver; and
comparing the unique identification information of the switch with description information of the target driver, and determining whether the target driver to be bound with the switch according to a comparison result.

5. The method of any of claims 1 to 4, further comprising:
sending, after all the information corresponding to the target driver is deleted, a notification for cancelling the target driver to a preset switch.

6. A driver implementation apparatus comprising:
a flow analysis module configured to analyze a driving flow of a target driver;
a difference comparison module configured to compare the driving flow of the target driver with a driving flow of a preset default driver to obtain a difference part;
an implementation module configured to implement the difference part; and
a registration module configured to register the target driver according to the driving flow of the default driver that is pre-implemented and the implemented difference part.

7. The apparatus of claim 6, wherein the implementation module is configured to:
analyze an action corresponding to the difference part,
obtain an interface corresponding to the action, and
implement the difference part according to the interface.

8. The apparatus of claim 6, wherein the registration module is configured to:
add description information and flow information of the target driver in a preset configuration file, wherein the description information of the target driver records identification information of the default driver, and the flow information of the target driver records the implemented difference part; and
search the driving flow of the default driver that is pre-implemented according to the identification information of the default driver, and instant the driving flow of the default driver that is pre-implemented and the implemented difference part to complete the registration.

9. The apparatus of claim 6, further comprising a binding module configured to:
obtain a unique identification information of a preset switch through the default driver; and
compare the unique identification information of the switch with description information of the target driver, and determine whether the target driver to be bound with the switch according to a comparison result.

10. The apparatus of any one of claims 6 to 9, further comprising a notification module configured to send a notification for cancelling the target driver to a preset switch after all information corresponding to the target driver is deleted.

11. A driver implementation device, comprising a processor, a memory, and a communication bus, wherein
the communication bus is configured to implement connection communication between the processor and the memory, the processor is configured to execute a driver implementation program stored in the memory to implement the steps of the driver implementation method of any one of claims 1 to 5.

12. A computer-readable storage medium storing one or more programs which, when executed by one or more processors, cause the one or more processors to implement the steps of the driver implementation method of any one of claims 1 to 5.
